# EUROPEAN PATENT APPLICATION

(11) **EP 1 555 779 A1**
(43) Date of publication of application: **20.07.2005**
(21) Application number: 03808855.5
(22) Date of filing: 11.07.2003
(51) Int. Cl.: H04L 12/56

(54) **DATA DISTRIBUTION DEVICE CAPABLE OF DISTRIBUTING A CONTENT**

(30) Priority: 15.10.2002 JP 2002300236
(71) Applicant: Sharp Kabushiki Kaisha, Osaka-shi, Osaka 545-8522 (JP)
(72) Inventor: ICHIKAWA, Yuji, Tenri-shi, Nara 632-0046 (JP)
(74) Representative: Brown, Kenneth Richard
(86) International application number: PCT/JP2003/008871
(87) International publication number: WO 2004/036842

(57) **Abstract**

When a distribution apparatus (200) receives a distribution request packet from a new reception apparatus (300) while distributing contents to a multicast address, the distribution apparatus transmits in return a distribution acceptance packet including the multicast address under the distribution (APPROVAL). Then, receiving a packet of contents in multicast form from the distribution apparatus (200), the reception apparatus (300) transmits to the distribution apparatus (200) a request for distributed data that includes the serial number (52) of the firstly-received packet as well as a buffer size necessary for starting reproduction (NOTIFICATION). The distribution apparatus (200) then reads necessary packets from a distributed data buffer to transmit to the reception apparatus (300) the distributed data (U43-U51) in descending order from the serial number 51 in intervals of the multicast distribution.

## Description

### Technical Field

The present invention relates to a data distribution apparatus, a reception apparatus, a data distribution method and a data distribution program product and, in particular, to a data distribution apparatus, a reception apparatus, a data distribution method and a data distribution program product for distributing data in streaming form.

### Background Art

With the arrival of the broadband Internet, attention is being given to streaming distribution of moving image, audio and the like. The streaming distribution differs from file transfer in that the former is transfer technology attaching importance to real-time performance or on-demand performance. Standards for existing streaming distribution protocols are defined by the Internet Engineering Task Force (IETF) that include the Real-time Transport Protocol (RTP) for data transmission and the Real Time Streaming Protocol (RTSP) for control.

Regarding streaming communication using for example Internet protocols, since the time required for transferring packets depends on a transfer path itself or traffic on the path, the arrival intervals at a receiving end have a large jitter even when a transmitting end transmits packets at constant intervals. Therefore, the streaming distribution generally employs a technique called buffering for storing a certain amount of data in advance for absorbing the jitter.

The streaming distribution which uses the buffering begins to use data after a certain amount of data is stored. Therefore, some period of time is necessary from the time when a user requests contents distribution to the time when playback is actually started. In order to address congestions or the like occurring on the Internet, usually data corresponding to a time period approximately from a few seconds to 30 seconds is stored. In order for the user to comfortably enjoy contents, this time period has to be shortened.

As a technique for shortening the aforementioned time period required for buffering, Japanese Patent Laying-Open No. 2002-84339 discloses a method of controlling the transmission rate by a transmission apparatus. Specifically, a reception apparatus informs the transmission apparatus of an amount to be buffered by a reception buffer and the transmission apparatus accordingly controls the transmission rate to allow the reception buffer to be filled speedily to the extent that does not cause overflow.

Further, Japanese Patent Laying-Open No. 2002-152274 discloses a method regarding streaming transmission using Quality of Service (QoS) capabilities. Specifically, while a QoS capability is set up on a network, data is sent in parallel at a data rate available without using the QoS capability. After the QoS set-up is completed, subsequent data is sent at a data rate guaranteed by the QoS capability.

Furthermore, Japanese Patent Laying-Open No. 2002-158657 discloses a streaming distribution method. Specifically, when the reception rate (speed) of stream data that is transmitted from a server to a client transmission/reception apparatus is insufficient for real-time display in the stream and thus real-time playback is impossible, the client transmission/reception apparatus receives, from another transmission/reception apparatus that received the stream data in the past, the stream data that the client transmission/reception apparatus has not received. Accordingly, the client transmission/reception apparatus can continue decoding the stream data without a hitch.

However, the technique disclosed in Japanese Patent Laying-Open No. 2002-84339 or 2002-152274 is effective only when contents can be transmitted appropriately for a buffer of a receiver, namely when the distribution is on-demand unicast distribution. For example, regarding multicast distribution that is simultaneous distribution to a plurality of receivers, data transmitted by a distribution server is used by a plurality of receivers. Therefore, if data is transmitted at a higher rate appropriately for a receiver that newly participates in the distribution, it is highly possible that respective buffers of other receivers overflow. A problem here is that the aforementioned conventional technique is not applicable to the multicast distribution.

Further, live distribution for example differs from on-demand distribution in that the former has a constant rate of shot data. Thus, a transmission apparatus of the live distribution cannot control its transmission rate appropriately for a buffer of a reception apparatus, resulting in a problem that this conventional technique cannot be applied to the live distribution.

Moreover, the method of streaming distribution disclosed in Japanese Patent Laying-Open No. 2002-158657 is effective only when stream data distributed from a server to a transmission/reception apparatus is also received by another transmission/reception apparatus. In other words, if the stream data is not received by another transmission/reception apparatus or there is no information about the destination, namely about another transmission/reception apparatus which receives the stream data, a problem arises that the stream data cannot be played in real time.

The present invention has been made for solving the problems described above. An object of the present invention is to provide a data distribution apparatus, a reception apparatus, a data distribution method and a data distribution program product capable of distributing contents comfortable for users by shortening the time required for buffering even when streaming distribution is performed by any distribution method that cannot adjust the distribution rate appropriately for a reception apparatus, like the multicast distribution and live distribution.

### Disclosure of the Invention

According to the present invention, with the purpose of solving the above-described problems, a data distribution apparatus is provided that includes: a distribution unit using packet communication to distribute, to a reception apparatus, data having a serial number attached thereto in streaming form; an acceptance unit accepting a request for distribution of stream data preceding a predetermined serial number, from the reception apparatus; and a transmission unit transmitting, upon the acceptance of the request for distribution, the stream data preceding the predetermined serial number in parallel with the distribution of data in the streaming form by the distribution unit.

Further, a data distribution apparatus is provided that includes: a distribution unit using packet communication to simultaneously distribute identical data in streaming form to a plurality of addresses; an acceptance unit accepting a request for distribution of the data from a reception apparatus; and a transmission unit transmitting, upon the acceptance of the request for distribution, in parallel with the distribution by the distribution unit to the plurality of addresses, data that is the same as the data being distributed by the distribution unit, to a unicast address of the reception apparatus from which the accepted request for distribution is provided, for a specific period of time.

With the purpose of solving the problems above, a reception apparatus is provided that includes: a reception unit using packet communication to receive, from a data distribution apparatus, data having a serial number attached thereto in streaming form; and a buffering unit storing, in buffer, when an address of a source of the packet received by the reception unit, a service identification number of the source and a service identification number of a destination are specific values communicated in advance to each other with the distribution apparatus and when an address of the destination is an address of the reception apparatus or a multicast address communicated to each other with the distribution apparatus, the packet received, so that no packet having the same serial number as the serial number attached to the packet is stored in the buffer.

Further, with the purpose of achieving the problems above, a data distribution method for distributing data from a data distribution apparatus to a reception apparatus is provided that includes: a distribution step for distributing by the data distribution apparatus, using packet communication, data having a serial number attached thereto in streaming form; an acceptance step for accepting by the data distribution apparatus, a request for distribution of the data distributed in the streaming form and preceding a predetermined serial number, from the reception apparatus; and a transmission step for transmitting, by the data distribution apparatus, upon receiving the request for distribution, in parallel with the distribution of the data in the streaming form in the distribution step, the data distributed in the streaming form and preceding the predetermined serial number.

Furthermore, with the purpose of solving the problems above, a data distribution method for distributing data from a data distribution apparatus to a plurality of addresses is provided that includes: a distribution step for simultaneously distributing by the data distribution apparatus, using packet communication, identical data in streaming form to the plurality of addresses; an acceptance step for accepting by the data distribution apparatus, a request for distribution of the data, from a reception apparatus; and a transmission step for transmitting, by the data distribution apparatus, upon accepting the request for distribution, in parallel with the distribution to the plurality of addresses in the distribution step, data that is the same as the data being distributed in the distribution step, to a unicast address of the reception apparatus from which the accepted request for distribution is provided, for a specific period of time.

Further, with the purpose of solving the problems above, a data distribution program product is provided, for a computer to execute a method of distributing data from a data distribution apparatus to a reception apparatus, the method including: a distribution step for distributing by the data distribution apparatus, using packet communication, data having a serial number attached thereto in streaming form; an acceptance step for accepting by the data distribution apparatus, a request for distribution of the data distributed in the streaming form and preceding a predetermined serial number, from the reception apparatus; and a transmission step for transmitting, by the data distribution apparatus, upon receiving the request for distribution, in parallel with the distribution of the data in the streaming form in the distribution step, the data distributed in the streaming form and preceding the predetermined serial number.

Furthermore, with the purpose of achieving the problems above, a data distribution program product is provided, for a computer to execute a method of distributing data from a data distribution apparatus to a plurality of addresses, the method including: a distribution step for simultaneously distributing by the data distribution apparatus, using packet communication, identical data in streaming form to the plurality of addresses; an acceptance step for accepting by the data distribution apparatus, a request for distribution of the data, from a reception apparatus; and a transmission step for transmitting, by the data distribution apparatus, upon accepting the request for distribution, in parallel with the distribution to the plurality of addresses in the distribution step, data that is the same as the data being distributed in the distribution step, to a unicast address of the reception apparatus from which the accepted request for distribution is provided, for a specific period of time.

### Brief Description of the Drawings

Fig. 1 shows a configuration and functions of a distribution apparatus 200 included in a data transmission system according to a first embodiment.
Fig. 2 shows a configuration and communication data processing functions of a reception apparatus 300 included in the data transmission system according to the first embodiment.
Fig. 3 shows a specific example of timing of a communication operation between distribution apparatus 200 and reception apparatus 300 according to the first embodiment.
Fig. 4 shows a configuration of a data transmission system according to a second embodiment.
Fig. 5 shows a configuration and functions of a distribution apparatus 400 included in the data transmission system according to the second embodiment.
Fig. 6 shows a specific example of timing of a communication operation between distribution apparatus 400 and a reception apparatus 300d according to the second embodiment.

### Best Modes for Carrying Out the Invention

Embodiments of the present invention are hereinafter described with reference to the drawings. In the following description, like parts and components are denoted by like reference characters. They also have like names and functions. Therefore, a detailed description thereof will not be repeated.

### First Embodiment

According to a first embodiment, a data transmission system includes a distribution apparatus 200 and a reception apparatus 300 to transmit data through a network. Communication between distribution apparatus 200 and reception apparatus 300 may be communication through such a network of leased lines as the Internet and a LAN (Local Area Network) or communication through a radio network. The communication is also applicable to packet communication through anything other than the Internet. In the present embodiment, it is supposed that data is transmitted through the Internet network. Further, it is supposed that contents of data including image, audio, text and the like are transmitted.

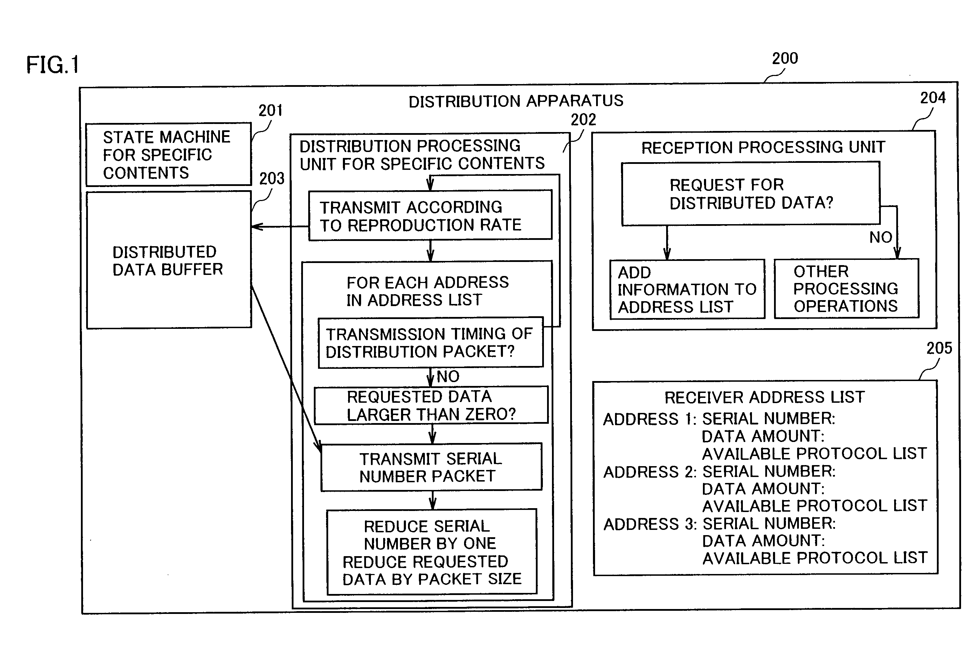

Referring to Fig. 1, distribution apparatus 200 included in the data transmission system of the present embodiment includes a control processing unit 201 that is a state machine, a contents distribution processing unit 202, a memory region 203 for storing data of contents that have been distributed, a packet reception processing unit 204, and a memory region 205 for holding a receiver address list. Memory region 203 and memory region 205 may be on such a semiconductor memory as DRAM (Dynamic Random Access Memory) or on such a storage device as hard disk. They are prepared for each content.

Operation of control processing unit 201 which is a state machine is detailed in the document of the RTSP (Real Time Streaming Protocol) standard and thus the description thereof is not provided here.

When reception processing unit 204 receives, from a reception apparatus 300 receiving contents distributed thereto, a request for data having been distributed and having its serial number preceding a certain serial number, reception processing unit 204 records, in the receiver address list held in memory region 205, the address of this reception apparatus 300, the serial number and an amount of the requested data. When an available protocol list is included in the request for distributed data, details of the list are also recorded. Reception apparatus 300 thus notifies distribution apparatus 200 of the available protocol list to allow distribution apparatus 200 to select an efficient protocol.

When control processing unit 201 is in a distribution state, distribution processing unit 202 transmits packets according to a reproduction rate of distribution data. When transmitted, the transmitted data is written in memory region 203 that is a distributed data buffer.

In general, the reproduction rate of distribution data is lower than the transmission rate of the distribution apparatus and accordingly there is an idle time between distributed packets. During the idle time, distribution processing unit 202 reads the receiver address list stored in memory region 205. Then, when the amount of requested data is larger than zero, a packet corresponding to the serial number is read from memory region 203 which is a distributed data buffer and the packet is transmitted. Subsequently, the serial number in the receiver address list stored in memory region 205 is decreased by one and the amount of requested data is reduced by the size of the transmitted packet. The above-described procedure is repeated during the idle time between distributed packets. Here, a group of packets to be sent through the repeated procedure may be combined in advance and then transmitted.

It is noted that, at the time of transmission, distribution processing unit 202 preferably selects an efficient protocol from the available protocol list. Further, before transmission, distribution processing unit 202 preferably checks a congestion state of distribution packets and checks whether or not a recovery is made from the congestion state and, if they are in the congestion state, postpones transmission until the recovery is made from the congestion state. It is also preferable to lower the transmission speed until the recovery is made from the congestion state. Accordingly, possibilities of delay or loss of distribution data received by a plurality of reception apparatuses 300 due to congestion can be reduced. In other words, this process is effective in avoidance of congestion.

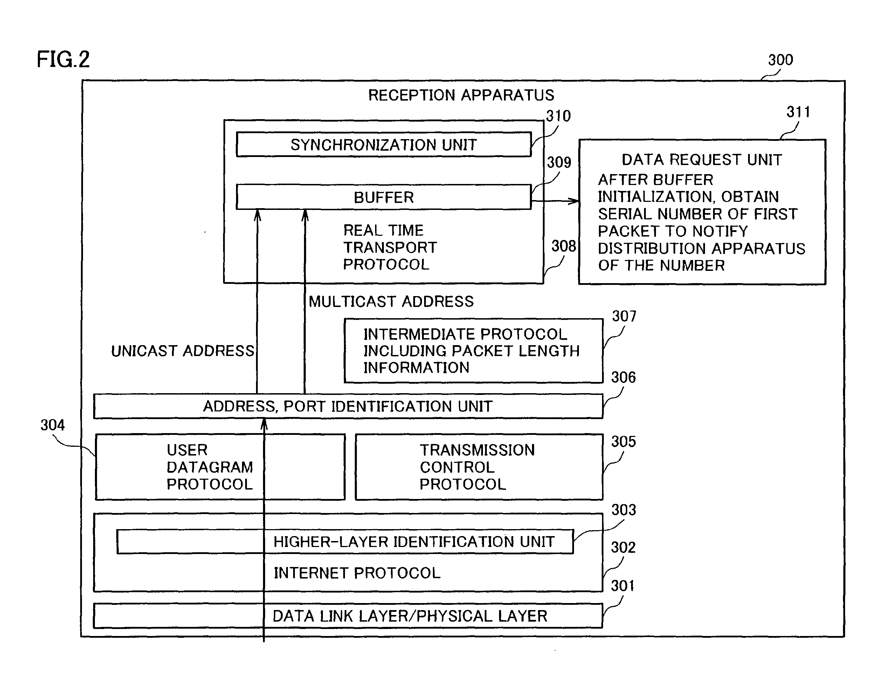

In Fig. 2, a configuration and communication data processing functions of reception apparatus 300 included in the data transmission system of the present embodiment are shown. Fig. 2 shows a specific example of reception apparatus 300 using an Internet protocol.

Referring to Fig. 2, reception apparatus 300 included in the data transmission system of the present embodiment includes a data link layer/physical layer 301, an Internet protocol 302 that is a network layer and includes a higher-layer identification unit 303, an address port identification unit 306, a user datagram protocol 304 that is a transport layer, a transmission control protocol 305, an intermediate protocol 307, a real time transport protocol 308 including a buffer 309 and a synchronization unit 310, and a data request unit 311.

Settings of data link layer/physical layer 301 are made to receive, after making a request for distribution, a packet to the receiver's own address or to a multicast address in the physical layer through a usual procedure. Receiving in the physical layer the packet to the receiver's address or multicast address, data link layer/physical layer 301 provides information about the packet to internet protocol 302.

Internet protocol 302 performs specified protocol processing and thereafter identifies a higher layer by higher-layer identification unit 303 included therein to provide the packet information to the higher layer.

It is assumed here that distribution apparatus 200 transmits distribution data as well as distributed data according to the user datagram protocol. Therefore, in this case, both of the data are provided to user datagram protocol 304.

Needless to say, this assumption does not limit the present invention. In other words, both of the distribution data and distributed data may use any of user datagram protocol 304 and transmission control protocol 305.

When received data are different from each other in protocol, conventional techniques identify the data as communications implementing different services respectively. In contrast, reception apparatus 300 of the present invention has a feature that it works regardless of protocols.

More specifically, usually both of the user datagram protocol and the transmission protocol regard the communication as communication that implements a specific service, when four kinds of information that are an address of a transmitter (source address), a service identification number of the transmitter (source port number), an address of a destination (destination address), and a service identification number of the destination (destination port number) and that are included in their packet information are identical to each other.

In contrast, a feature of reception apparatus 300 of the present invention is as follows. When three kinds of information in their packet information that are an address of a transmitter (source address), a service identification number of the transmitter (source port number) and a service identification number of a destination (destination port number) are identical to each other and an address of the destination (destination address) is the receiver's address or a multicast address made known to each other in advance, reception apparatus 300 regards the communication as communication that implements a specific service to carry out the same processing in address port identification unit 306 and real time transport protocol 308.

Specifically, after address port identification unit 306 identifies the address and port of a packet provided thereto, real time transport protocol 308 stores the packet in buffer 309. It is noted that, if transmission control protocol 305 is used, after the address and port are identified by address port identification unit 306, the packet is provided to real time transport protocol 308 through intermediate protocol 307 including information about the packet length for linking transmission control protocol 305 with real time transport protocol 308.

Then, in synchronization unit 310, time synchronization is established in the order of serial numbers in the packet information according to time stamp information in the packet information while data is provided from buffer 309 to an application.

Here, reception apparatus 300 in the present embodiment has a feature that, when a packet is written in buffer 309 for the first time after initialization, data request unit 311 transmits a request for distributed data including information about the serial number of the packet together with information about the buffer size to distribution unit 200.

Accordingly, reception apparatus 300 in the present embodiment performs equivalent processing regardless of whether the destination address is a multicast address or the receiver's address and regardless of whether the transmission protocol is the UDP or TCP, and thus reception apparatus 300 can achieve intended effects in receiving data from distribution apparatus 200.

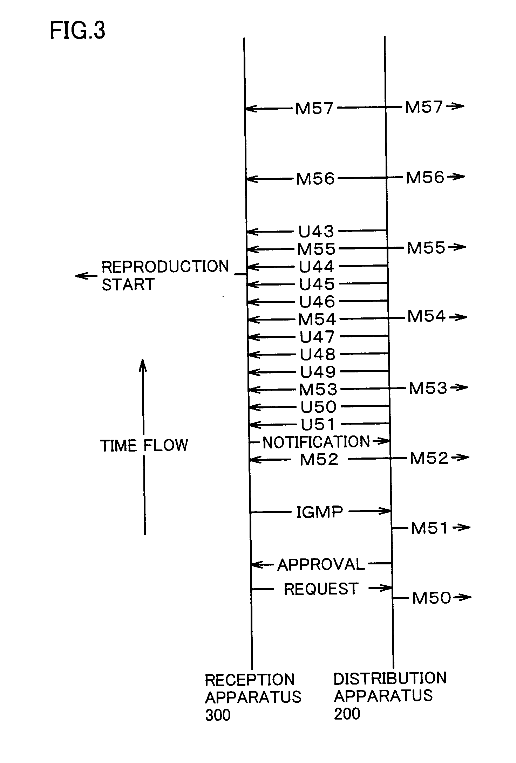

This data transmission between distribution apparatus 200 and reception apparatus 300 in the first embodiment is described using Fig. 3.

Regarding Fig. 3, it is assumed that data distribution from distribution apparatus 200 is multicast distribution using a multicast address to a plurality of reception apparatuses 300. It is noted that the time flow in Fig. 3 is from the bottom toward the top. In addition, in the character strings following respective arrows, M indicates that the destination address is a multicast address and U indicates that the destination address is a unicast address of reception apparatus 300. Numerals following M or U represent the serial number of a packet.

Referring to Fig. 3, distribution apparatus 200 starts distribution to transmit, from distribution processing unit 202, packets to the multicast address according to a reproduction rate. In Fig. 3, the distribution is indicated by arrows extending transversely from the straight line representing distribution apparatus 200 and, from the numbers following M, it is seen that packets are successively transmitted from the packet having serial number 50.

When a new reception apparatus 300 sends a distribution request packet to distribution apparatus 200 (indicated in Fig. 3 by the arrow with "REQUEST"), distribution apparatus 200 receiving the distribution request packet in reception processing unit 204 provides in return a distribution acceptance packet including the multicast address under the distribution (APPROVAL).

Then, reception apparatus 300 asks, using the Internet Group Management Protocol, a group of intervening routers (not shown) to route the given multicast address to reception apparatus 300 (IGMP).

When routing information of the router group is correctly set, a packet to the multicast address is provided from distribution apparatus 200 to reception apparatus 300 (M52).

Following this, reception apparatus 300 sends, from data request unit 311, a request for distributed data to distribution apparatus 200 together with serial number 52 of the firstly received packet and a buffer size necessary for starting reproduction (NOTIFICATION). It is supposed here that the buffer size necessary for starting reproduction is nine packets. Thus, since reception apparatus 300 notifies distribution apparatus 200 of the serial number of the packet that reception apparatus 300 receives for the first time, an effect that reception apparatus 300 cooperates with distribution apparatus 200 is achieved. Further, since reception apparatus 300 notifies distribution apparatus 200 of the required amount of data, the effect that reception apparatus 300 cooperates with distribution apparatus 200 is achieved.

Receiving the request for distributed data in reception processing unit 204, distribution apparatus 200 records, in the receiver address list held in memory region 205, the address of this reception apparatus 300, the serial number and the requested amount of data (nine packets). Distribution processing unit 202 reads the necessary serial number packets from memory region 203 which is the distributed data buffer and, in intervals of the multicast distribution that are each idle time between packets of the multicast distribution, transmits the distributed data (U43 to U51) from serial number 51 in descending order to the unicast address of reception apparatus 300 that is read from the receiver address list held in memory region 205. At this time, preferably distribution apparatus 200 sends to reception apparatus 300 the distributed data at a transmission speed of at least the reproduction rate.

Reception apparatus 300 receives the distributed data transmitted to the unicast address of the reception apparatus and stores the data in buffer 309. Then, reception apparatus 300 stores the data necessary for reproduction in buffer 309 by a predetermined time. From this time, reproduction is started (REPRODUCTION START).

It is seen from the above that the data transmission system of the present embodiment has the following feature. When distribution is not in on-demand form and reception apparatus 300 receives a distribution packet for the first time after making a request for distribution, reception apparatus 300 requests distribution apparatus 200 to send distributed data preceding the packet. Then, in parallel with the distribution, distribution apparatus 200 transmits data distributed in the past to reception apparatus 300.

Since the above-described processing is executed by the data transmission system of the present embodiment, even when the distribution method is such a method as live distribution or multicast distribution that cannot adjust the distribution rate appropriately for a reception apparatus, distribution apparatus 200 transmits, in parallel with the distribution, distributed data to reception apparatus 300 so as to shorten the buffering time required for storing data before reproduction of contents by reception apparatus 300. This is because distribution apparatus 200 of the present embodiment has memory region 203 which is a distributed data buffer for storing data having been distributed. Accordingly, a similar effect is achieved for such distribution as live distribution having no distribution data in a storage device. Thus, contents comfortable for users can be distributed.

Further, since reception apparatus 300 can receive, after it starts receiving the distribution, immediately preceding distributed-data from distribution apparatus 200 at a transmission rate that is at least its reproduction rate, the time required for buffering in reception apparatus 300 can be shortened.

Furthermore, since the data transmission system of the present embodiment transmits distribution data from distribution apparatus 200 to reception apparatus 300 in descending order of the serial numbers, reception apparatus 300 can start reproduction as soon as the total amount of immediately preceding distributed-data and the distribution data becomes equal to an amount necessary for reproduction.

Moreover, according to the present embodiment, since distribution apparatus 200 transmits distributed data appropriately for a buffer size of reception apparatus 300, it can be avoided to consume the transmission band more than necessary. In addition, since distribution apparatus 200 performs the distribution in multicast form and performs the transmission of distributed data in unicast form, it can be avoided to inadvertently consume the transmission band.

### Second Embodiment

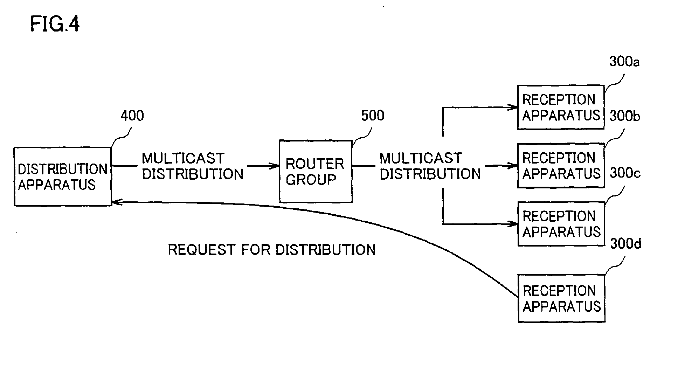

Referring to Fig. 4, according to a second embodiment, a data transmission system includes a distribution apparatus 400 and reception apparatuses 300a, 300b, 300c, 300d (these are herein referred to collectively as reception apparatus 300) to transmit data through a network. In Fig. 4, distribution apparatus 400 has already been in a distribution state and is performing multicast distribution to reception apparatuses 300a, 300b, 300c through a group of routers including a router 500. Reception apparatus 300d is a reception apparatus 300 that newly requests distribution. Before the request for distribution, router 500 does not transfer multicast packets to reception apparatus 300d.

Since reception apparatus 300 included in the data transmission system of the present embodiment is similar to reception apparatus 300 included in the data transmission system of the above-described first embodiment, the description thereof is not repeated here.

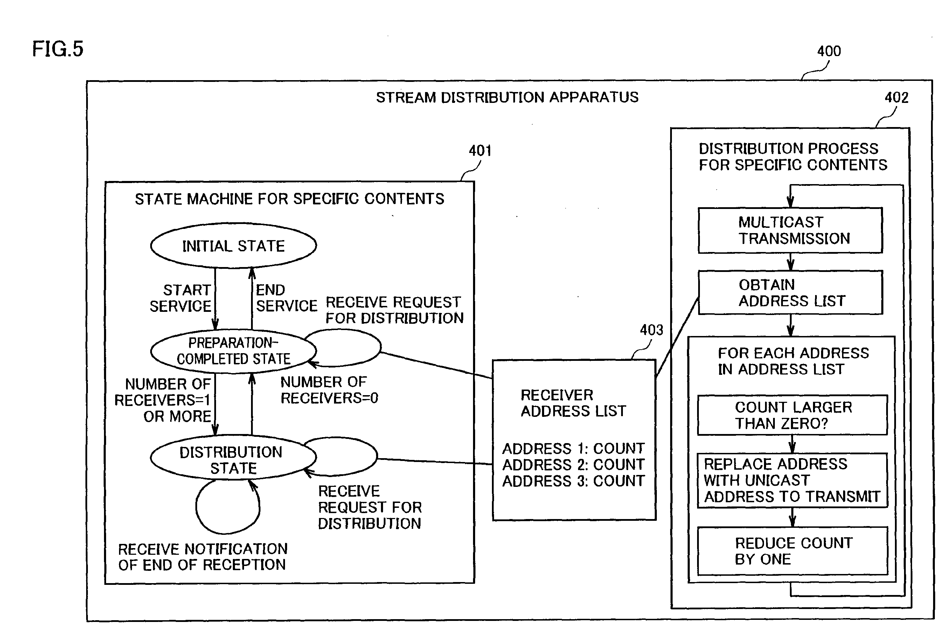

In Fig. 5, a configuration and functions of distribution apparatus 400 included in the data transmission system of the second embodiment are shown.

Referring to Fig. 5, distribution apparatus 400 included in the data transmission system of the present embodiment includes a control processing unit 401 that is a state machine, a contents distribution processing unit 402 and a memory region 403 for holding a receiver address list. They are prepared for each content.

Control processing unit 401 is generated when specific contents are prepared and starts from an initial state. Here, for example, a memory for holding the receiver address list in memory region 403 is secured, or, in the case of live distribution, such equipment as camera to be used is checked.

Then, when it becomes necessary to start a distribution service of specific contents by distribution apparatus 400 (for example when a request for distribution setting is received from a first user or when it is a distribution time determined in advance), control processing unit 401 makes a transition of its state to a preparation state. In the preparation state, information and resources necessary for distribution are secured, for example, a multicast address is obtained, and a request for distribution is waited for.

Then, when control processing unit 401 is in a preparation-completed state or distribution state and distribution apparatus 400 receives a request for distribution from reception apparatus 300, distribution apparatus 400 adds the address of reception apparatus 300 to the receiver address list held in memory region 403 and prepares count values for respective addresses. An initial value of the count values is hereinlater described. Following this, a necessary response is sent to reception apparatus 300. Since contents of the response are detailed in the documents or the like of the RTSP specification, the description thereof is not provided here.

Further, when control processing unit 401 is in the distribution state and distribution apparatus 400 receives a notification that the reception is competed from reception apparatus 300, distribution apparatus 400 deletes the address of reception apparatus 300 from the receiver address list stored in memory region 403.

Next, when the number of reception apparatuses 300 that make respective requests for distribution reaches one or more, control processing unit 401 activates a distribution process in contents distribution processing unit 402 to change its state to the distribution state. Further, when the receiver address list stored in memory region 403 is emptied of addresses, control processing unit 401 ends the distribution process in contents distribution processing unit 402 to return to the preparation-completed state.

In the distribution process by contents distribution processing unit 402, packets are transmitted according to a speed of contents.

At this time, a predetermined address is used first to carry out multicast transmission. Then, the receiver address list stored in memory region 403 is referred to and, when the count attached to the address is larger than zero, the receiver address list is modified and the multicast-transmitted data is transmitted to only an address to which a count larger than zero is attached (unicast transmission). After this, the count attached to the address is decreased by one.

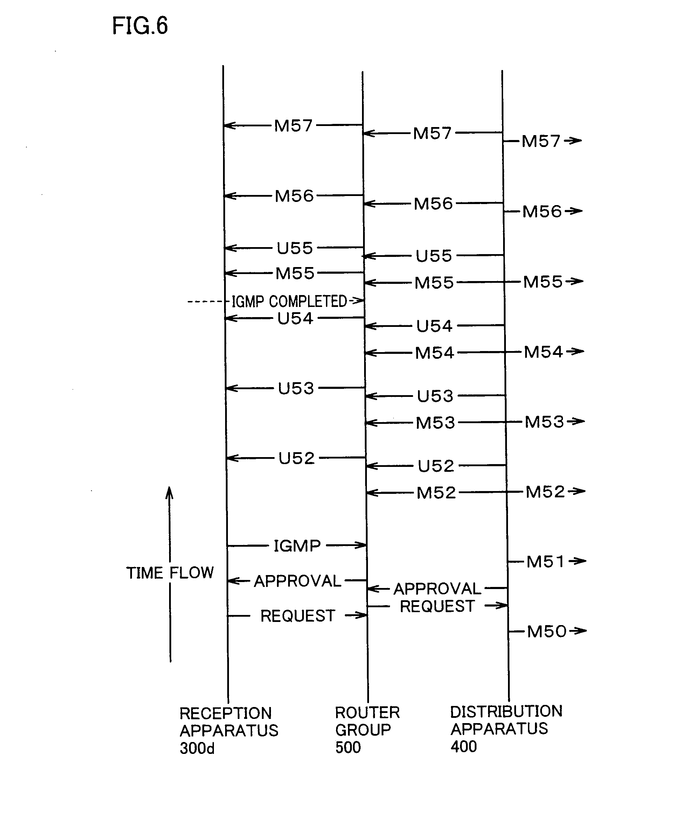

The data transmission in the data transmission system of the second embodiment shown in Fig. 4 between above-described distribution apparatus 400 and reception apparatus 300d that newly requests distribution is described using Fig. 6.

Referring to Fig. 6, when reception apparatus 300d sends a distribution request packet to distribution apparatus 400 (indicated by the arrow with "REQUEST" in Fig. 6), distribution apparatus 400 receiving the distribution request packet updates the receiver address list stored in memory region 403 as described above to transmit a response to reception apparatus 300d (APPROVAL). This response includes information about a multicast address under the distribution.

Following this, reception apparatus 300d receiving the response from distribution apparatus 400 uses the Internet Group Management Protocol to notify router 500 located between reception apparatus 300d and distribution apparatus 400 of participation in multicast of distributed packets (IGMP).

Until router 500 processes the notification about participation (completion of IGMP), no distribution data is provided to reception apparatus 300d. In Fig. 6, it is indicated by arrows M52, M53 and M54 that some packets are distributed from distribution apparatus 400 while they do not reach reception apparatus 300d. It is seen from the above that any conventional technique cannot allow reception apparatus 300d to receive stream data until settings of multicast transfer like IGMP are completed.

In contrast, distribution apparatus 400 of the present embodiment transmits stream data in unicast form to reception apparatus 300d until the count value attached to the address of reception apparatus 300d in the updated receiver address list becomes zero (arrows U52 to U55). Accordingly, even in a period during which no multicast distribution data is transferred to reception apparatus 300d, distribution apparatus 400 of the present embodiment enables reception apparatus 300d to receive data having the data contents in unicast form.

Since the time consumed by router 500 to process the multicast participation notification depends on the size of the network and the number of packets transmitted in this period depends on the data rate of contents, preferably the initial value of the count attached to the receiver address is determined from the size of the network and the data rate of the contents. Further, instead of the method of attaching the count to the address of reception apparatus 300d in the updated version, a method of notifying by reception apparatus 300d of the fact that packets of a multicast address are received so that distribution apparatus 400 receiving this notification stops unicast transmission to reception apparatus 300d may be employed. In this way, distribution apparatus 400 receiving from reception apparatus 300d a notification of the fact that reception apparatus 300d receives data distributed in multicast form stops the unicast transmission, so that it can be avoided to uselessly consume the transmission band.

It is noted that Fig. 6 does not show some processing that has been considered necessary, for example, control of congestion. The congestion control and the like can independently be performed by a lower-layer protocol (for example RTP) in distribution apparatus 400 in the distribution process by above-described contents distribution processing unit 402.

It is seen from the above that the data transmission system of the present embodiment has the following feature. For multicast distribution, in the period after a certain reception apparatus 300d makes a request for distribution and then obtains a multicast address for distribution and before multicast transfer settings of a group of routers between reception apparatus 300d and distribution apparatus 200 are completed, distribution apparatus 400 can transmit, in parallel with the multicast distribution, the same stream data in unicast form to the address of reception apparatus 300d.

The above-described processing is performed in the data transmission system of the present embodiment for the multicast distribution to allow distribution apparatus 400 to transmit, in the period in which router 500 makes multicast routing settings, packets that are not multicast-transferred to reception apparatus 300d, to the unicast address of reception apparatus 300d. Thus, the data transmission system of the present embodiment can effectively use the setting time for the multicast routing. Moreover, since distribution apparatus 400 of the present embodiment distributes contents in unicast form to reception apparatus 300d that makes a request for distribution during a certain period of time after distribution apparatus 400 receives the request for distribution, data in the period before multicast transfer settings of intervening router 500 are completed can be transmitted to reception apparatus 300d. Thus, contents comfortable for users can be distributed.

Furthermore, the above-described data transmission method of the data transmission system may be provided as a program. This program may also be recorded on such a computer-readable recording media used together with a computer as flexible disk, CD-ROM (Compact Disc-Read Only Memory), ROM (Read Only Memory), RAM (Random Access Memory) and memory card to provide the program as a program product. Alternatively, the program may be provided by being recorded on such a recording medium contained in a computer as hard disk. The program may also be provided by being downloaded through a network. In this way, a computer can be used to achieve the effects derived from the above-described processing.

The program product to be provided is installed in such a program storage unit as hard disk and executed. It is noted that the program product includes a program itself and a recording medium on which the program is recorded.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

As heretofore discussed, according to the present invention, the period of time for buffering when the streaming distribution is performed can be shortened and thus the present invention is effectively applicable to streaming distribution of contents in any distribution system like multicast distribution and live distribution that cannot adjust the distribution rate appropriately for a reception apparatus.

## Claims

1. A data distribution apparatus comprising:
a distribution unit (202) using packet communication to distribute, to a reception apparatus, data having a serial number attached thereto in streaming form;
an acceptance unit (204) accepting a request for distribution of stream data preceding a predetermined serial number, from said reception apparatus; and
a transmission unit (202) transmitting, upon the acceptance of said request for distribution, said stream data preceding said predetermined serial number in parallel with the distribution of data in said streaming form by said distribution unit (202).

2. The data distribution apparatus according to claim 1, further comprising a hold unit (203) holding said stream data transmitted by said distribution unit (202) for a predetermined period of time.

3. The data distribution apparatus according to claim 1, wherein
said transmission unit (202) transmits said stream data preceding said predetermined serial number in descending order of the serial number.

4. The data distribution apparatus according to claim 1, wherein
said acceptance unit (204) accepts said request for distribution including information about an amount of data requested to be distributed, from said reception apparatus, and
said transmission unit (202) transmits said stream data preceding said predetermined serial number by said amount of data.

5. The data distribution apparatus according to claim 1, wherein
said distribution unit (202) distributes said data having the serial number attached thereto in streaming form to a multicast address,
said transmission unit (202) transmits said stream data preceding said predetermined serial number to a unicast address of said reception apparatus from which said accepted request for distribution is provided.

6. The data distribution apparatus according to claim 1, further comprising a monitor unit (202) monitoring a congestion state of data distribution by said distribution unit (202), wherein
when said monitor unit (202) detects that there is the congestion state, said transmission unit (202) stops or decelerates transmission of said stream data preceding said predetermined serial number, monitors whether recovery from said congestion state is made, and then controls transmission of said data.

7. A data distribution apparatus comprising:
a distribution unit (402) using packet communication to simultaneously distribute identical data in streaming form to a plurality of addresses;
an acceptance unit (401) accepting a request for distribution of said data from a reception apparatus; and
a transmission unit (402) transmitting, upon the acceptance of said request for distribution, in parallel with the distribution by said distribution unit (402) to said plurality of addresses, data that is the same as the data being distributed by said distribution unit (402), to a unicast address of said reception apparatus from which said accepted request for distribution is provided, for a specific period of time.

8. The data distribution apparatus according to claim 7, further comprising:
a notification unit (401) receiving, from said reception apparatus from which said accepted request for distribution is provided, notification that the data distributed by said distribution unit (402) is received; and
a stop unit (401) stopping, upon the reception of said notification, the transmission to said unicast address of said reception apparatus.

9. A reception apparatus comprising:
a reception unit (301) using packet communication to receive, from a data distribution apparatus, data having a serial number attached thereto in streaming form; and
a buffering unit (306) storing, in buffer (309), when an address of a source of the packet received by said reception unit, a service identification number of said source and a service identification number of a destination are specific values communicated in advance to each other with said distribution apparatus and when an address of the destination is an address of said reception apparatus or a multicast address communicated to each other with said distribution apparatus, said packet received, so that no packet having the same serial number as the serial number attached to said packet is stored in said buffer.

10. The reception apparatus according to claim 9, further comprising:
a first distribution request unit (311) making a request for distribution of said data to said data distribution apparatus; and
a second distribution request unit (311) making a request for stream data preceding a serial number of a firstly received packet, after said request for distribution is made, to said data distribution apparatus.

11. The reception apparatus according to claim 10, wherein
said second distribution request unit (311) makes notification of an amount of requested data in making said request for said stream data preceding said serial number of said firstly received packet.

12. The reception apparatus according to claim 10, wherein
said second distribution request unit (311) makes notification of a type of a receivable protocol in making said request for said stream data preceding said serial number of said firstly received packet.

13. The reception apparatus according to claim 9, further comprising:
a first distribution request unit (311) making a request for distribution of said data to said data distribution apparatus; and
a notification unit (311) making, when a first multicast packet is received from said data distribution apparatus after said request for distribution is made, notification that said first multicast packet is received, to said data distribution apparatus.

14. A data distribution method for distributing data from a data distribution apparatus to a reception apparatus, comprising:
a distribution step (M50-M57) for distributing by said data distribution apparatus, using packet communication, data having a serial number attached thereto in streaming form;
an acceptance step ("REQUEST", "APPROVAL") for accepting by said data distribution apparatus, a request for distribution of said data distributed in said streaming form and preceding a predetermined serial number, from said reception apparatus; and
a transmission step (U43-U51) for transmitting, by said data distribution apparatus, upon receiving said request for distribution, in parallel with the distribution of said data in said streaming form in said distribution step, said data distributed in said streaming form and preceding said predetermined serial number.

15. A data distribution method for distributing data from a data distribution apparatus to a plurality of addresses, comprising:
a distribution step (M50-M57) for simultaneously distributing by said data distribution apparatus, using packet communication, identical data in streaming form to said plurality of addresses;
an acceptance step ("REQUEST", "APPROVAL") for accepting by said data distribution apparatus, a request for distribution of said data, from a reception apparatus; and
a transmission step (U52-U55) for transmitting, by said data distribution apparatus, upon accepting said request for distribution, in parallel with the distribution to said plurality of addresses in said distribution step, data that is the same as the data being distributed in said distribution step, to a unicast address of said reception apparatus from which said accepted request for distribution is provided, for a specific period of time.

16. A data distribution program product for a computer to execute a method of distributing data from a data distribution apparatus to a reception apparatus, said method comprising:
a distribution step (M50-M57) for distributing by said data distribution apparatus, using packet communication, data having a serial number attached thereto in streaming form;
an acceptance step ("REQUEST", "APPROVAL") for accepting by said data distribution apparatus, a request for distribution of said data distributed in said streaming form and preceding a predetermined serial number, from said reception apparatus; and
a transmission step (U43-U51) for transmitting, by said data distribution apparatus, upon receiving said request for distribution, in parallel with the distribution of the data in said streaming form in said distribution step, said data distributed in said streaming form and preceding said predetermined serial number.

17. A data distribution program product for a computer to execute a method of distributing data from a data distribution apparatus to a plurality of addresses, said method comprising:
a distribution step (M50-M57) for simultaneously distributing by said data distribution apparatus, using packet communication, identical data in streaming form to said plurality of addresses;
an acceptance step ("REQUEST", "APPROVAL") for accepting by said data distribution apparatus, a request for distribution of said data, from a reception apparatus; and
a transmission step (U52-U55) for transmitting, by said data distribution apparatus, upon accepting said request for distribution, in parallel with the distribution to said plurality of addresses in said distribution step, data that is the same as the data being distributed in said distribution step, to a unicast address of said reception apparatus from which said accepted request for distribution is provided, for a specific period of time.
